# EUROPÄISCHE PATENTSCHRIFT

(11) **EP 0 501 110 B1**
(45) Veröffentlichungstag und Bekanntmachung des Hinweises auf die Patenterteilung: **13.03.1996**
(21) Anmeldenummer: 92100308.3
(22) Anmeldetag: 10.01.1992
(51) Int. Cl.: G02B 21/08, G02B 21/06, G02B 21/18, F21V 19/04

(54) **Beleuchtungseinrichtung für optische Geräte mit separaten Beleuchtungsstrahlengängen**
Lighting device for optical apparatus wit separate beam paths
Dispositif d'éclairage pour appareils optiques comprenant des trajets d'illumination séparés

(30) Priorität: 15.02.1991 DE 4104609
(43) Veröffentlichungstag der Anmeldung: 02.09.1992
(73) Patentinhaber: Leica AG, CH-9435 Heerbrugg (CH)
(72) Erfinder: Amann, Bernd, A-6845 Hohenems / Vbg. (AT)

(56) Entgegenhaltungen:
- DE-A- 3 816 547
- FR-A- 1 339 989
- GB-A- 2 062 856
- US-A- 4 402 038
- US-A- 4 938 575

## Beschreibung

Die Erfindung betrifft eine Beleuchtungseinrichtung für Operationsmikroskope gemäß dem Oberbegriff des Patentanspruchs 1.

Operationsmikroskopen zeichnen sich u.a. dadurch aus, daß mehrere separate Beobachtungsstrahlengänge vorgesehen sind und somit mehrere Operateure gleichzeitig an einer Objektstelle arbeiten können. Modeme Ausführungen dieser Operationsmikroskope sind außerdem so ausgestattet, daß jeder Operateur eine individuelle Vergrößerung und eine individuelle Fokusebene innerhalb der Objektstelle anwählen kann. Dazu ist es notwendig, für jeden Beobachtungsstrahlengang eine möglichst große und gleichmäßige Lichtntensität auf dem Objekt zu erzeugen. Dabei muß selbstverständlich gewähreistet sein, daß die Objektstelle nicht durch das Beleuchtungslicht geschädigt wird.

Insbesondere während einer Operation sind die Zuverlässigkeit und die Betriebssicherheit des verwendeten Mikroskops wesentliche Merkmale. Der umständliche Wechsel einer plötzlich ausgefallenen Halogenlampe könnte zu einer folgenschweren Unterbrechung bzw. zum Abbruch einer Operation führen.

Eine Schwachstelle bei derartigen Operationsmikroskopen liegt in der relativ geringen Lebensdauer der verwendeten Halogenlampe. Die Lebensdauer wird allgemein mit ca. 50 Betriebsstunden angegeben. Dieser Idealwert wird meist dann drastisch unterschritten, wenn beispielsweise eine ungenügende Wärmeableitung vorliegt bzw. wenn die Halogenlampe mit Überspannung betrieben wird.

Aus der DE-A-38 16 547 ist eine Lichtquellenanordnung für ein Operationsmikroskop bekannt, bei der zwei Lampen in einem Gehäuse auf einem Lampenschnellwechsler angeordnet sind. Beide Lichtquellen können wahlweise aktiviert werden. Das Licht der jeweils aktivierten Lichtquelle wird über einen Strahlengang und das Mikroskopobjektiv auf das Präparat geführt.

Es ist daher Aufgabe der vorliegenden Erfindung, ausgehend vom bekannten Stand der Technik, daß neben einer verbesserten Betriebssicherheit eines Operationsmikroskops gleichzeitig die Lichtverhältnisse auf dem Objekt optimiert werden.

Diese Aufgabe wird erfindungsgemäß durch die kennzeichnenden Merkmale des Patentanspruchs 1 gelöst. Vorteilhafte Weiterbildungen sind Gegenstand der Unteransprüche.

Die Erfindung zeichnet vor allem dadurch aus, daß die Halogenlampe zentral im Lampenhaus angeordnet ist und die Beleuchtungsstrahlengänge symmetrisch zur Lampenhausebene ausgebildet sind. Die Beleuchtungsstrahlengänge werden separat aus dem Lampenhaus herausgeführt und jeweils gegenüberliegend über das gemeinsame Hauptobjektiv geführt werden. Durch diese Maßnahmen wird das erzeugte Licht gleichmäßig auf die jeweiligen Beleuchtungsstrahlengänge bzw. die zugehörigen Beobachtungsstrahlengänge verteilt und somit einheitliche Beleuchtungsbedingungen geschaffen. Ferner wird erreicht, daß sich lediglich eine einzige Halogenlampe in Wirkstellung befindet und sich die erzeugte Wärme in einfacher Art und Weise ableiten läßt.

In einer weiteren Ausgestaltung der Erfindung ist in jedem der Beleuchtungsstrahlengänge ein Kaltlichtspiegel vorgesehen, sodaß eine thermische Belastung des Objekts durch die auftreffenden Lichtstrahlen ausgeschlossen wird.

Die Erfindung ist in Ausführungsbeispielen dargestellt und wird an Hand der schematischen Zeichnungen näher erläutert. Es zeigen:
- die Fig. 1: eine Ansicht des erfindungsgemäßen Lampenschnellwechslers mit zwei separaten Beleuchtungsstrahlengängen,
- die Fig. 2: einen Horizontalschnitt durch das Lampenhaus mit beiden Beleuchtungsstrahlengängen und dem gemeinsamen Hauptobjektiv des Operationsmikroskops,
- die Fig. 3: eine Seitenansicht des als Rad ausgebildeten Lampenschnellwechslers,
- die Fig. 4: ein elektrisches Schaltbild mit einer Diodenanzeige für eine defekte Lichtquelle,
- die Fig. 5: ein elektrisches Schaltbild zur motorischen Ansteuerung des Lampenschnellwechslers.

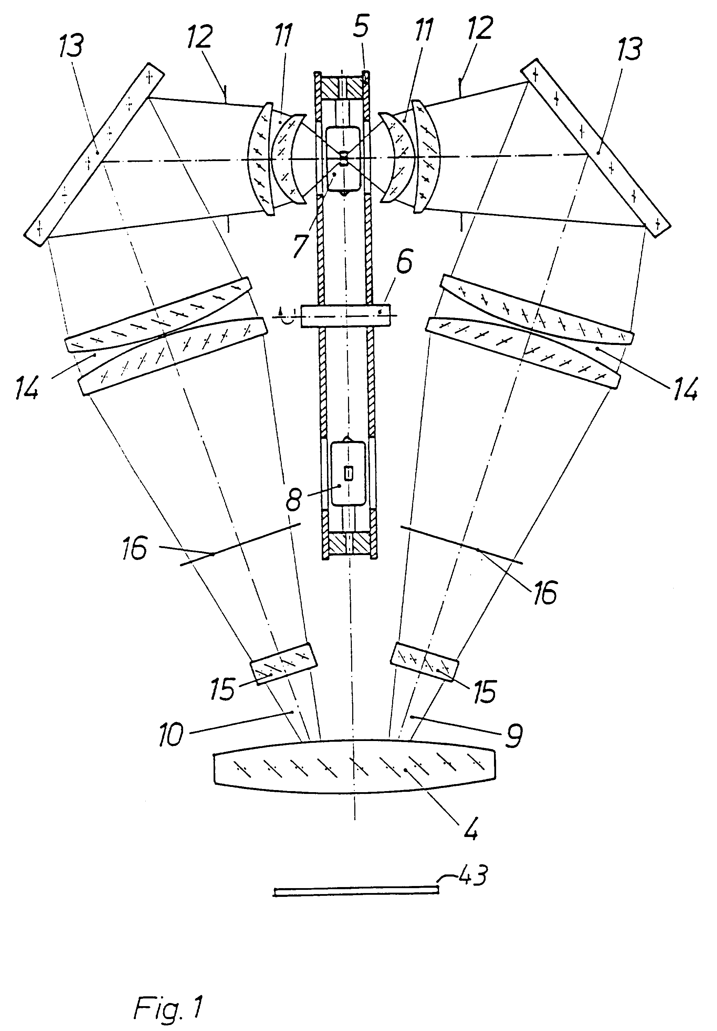

Die Figur 1 zeigt eine Ansicht des Lampenschnellwechslers 5 mit zwei separaten Beleuchtungsstrahlengängen 9, 10. Der Schnellwechsler 5 ist als Rad ausgebildet und über eine Achse 6 drehbar angeordnet. Am Schnellwechsler 5 ist eine Lichtquelle 7 sowie eine zusätzliche Lichtquelle 8 vorgesehen. In den Beleuchtungsstrahlengängen 9 und 10 sind jeweils, ausgehend von der Lichtquelle 7, ein Kollektorlinsensystem 11, eine Blende 12, ein Umlenkspiegel 13, eine Beleuchtungsoptik 14, eine Filterhalterung 16 und ein Umlenkprisma 15 angeordnet. Die Beleuchtungsstrahlengänge 9, 10 werden getrennt voneinander, und zwar symmetrisch zur Ebene des Lampenschnellwechslers 5, über ein gemeinsames Hauptobjektiv 4 geführt.

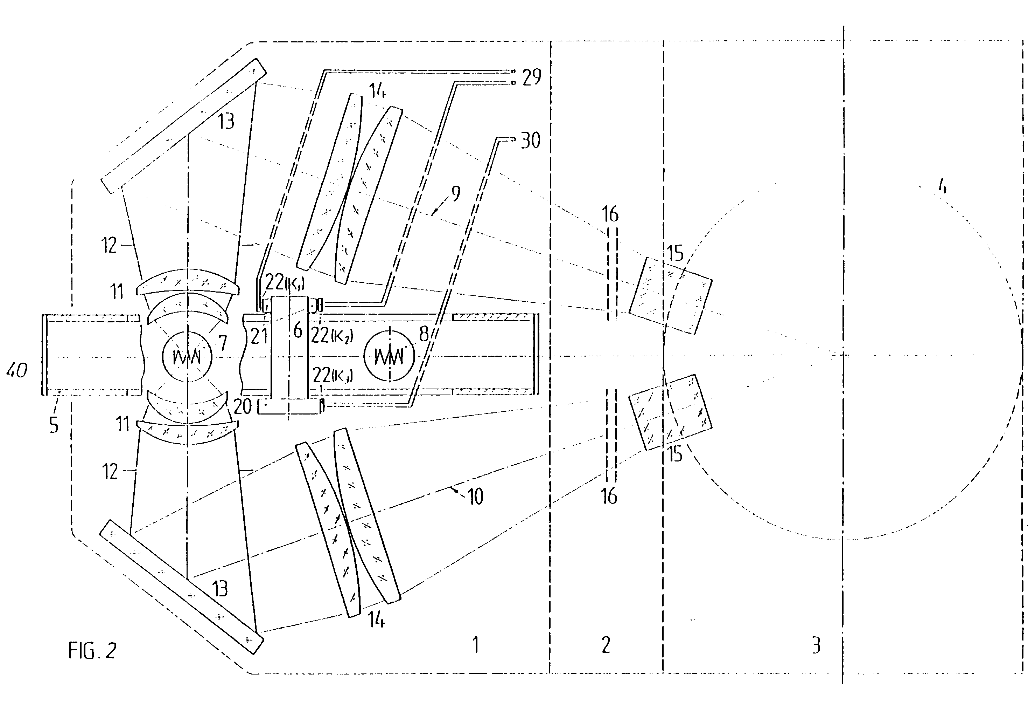

Die Figur 2 zeigt ein Lampenhaus 1 mit den separat ausgebildeten Beleuchtungsstrahlengängen 9 und 10 in Aufsicht. Die Strahlengänge 9, 10 sind in dieser Darstellung aus Gründen der Übersichtlichkeit in der gleichen Ebene des Schnellwechslers 5 gezeigt. Tatsächlich verlassen die Strahlengänge 9, 10 diese Ebene nach dem Durchgang durch das jeweilige Kollektorlinsensystem 11, wie dies bereits in der Figur 1 angedeutet ist. Das Lampenhaus 1 ist über einen Träger 2 mit dem Operationsmikroskop 3 verbunden. An zentraler Stelle des Lampenhauses 1 ist die in Wirkstellung gebrachte Halogenlampe 7 dargestellt. Diese Lichtquelle 7 ist auf dem als Rad ausgebildeten Lampenschnellwechsler 5 angeordnet, der an einer Stelle aus dem Lampengehäuse 1 ragt und dort eine Handhabe 40 bildet. Der Wechsler 5 ist um die Achse 6 drehbar gelagert und weist mindestens eine zusätzliche Lichtquelle 8 auf. Die hier dargestellte Lichtquelle 8 ist als Reservelichtquelle ausgebildet. Bei einem Ausfall der Lichtquelle 7 wird der Lampenschnellwechsler 5 über die Handhabe 40 gedreht und die Reservelichtquelle 8 in Wirkstellung gebracht.

Die zusätzliche Lichtquelle 8 kann andere physikalische Eigenschaften aufweisen als die Lichtquelle 7. So sind beispielsweise Anwendungen möglich, bei denen die Farbtemperatur des Beleuchtungslichts während des Mikroskopierens geändert werden müssen. In den nachfolgenden Ausführungsbeispielen wird der Lampenschnellwechsler 5 in der Ausführungsformen mit einer Reservelichtquelle 8 beschrieben.

Die elektrische Verbindung der Lichtquelle 7 mit einer nicht näher gezeigten Spannungsquelle erfolgt über Kontaktstifte 21, Kontaktfedern 22 und einen Kontaktschleifring 20. Die elektrischen Bauelemente 21, 22 sind an der Achse 6 des Lampenschnellwechslers 5 angeordnet und jeweils mit elektrischen Leitungen 29 verbunden. Der Kontaktschleifring 20 ist fest an der Achse 6 angeordnet und über eine Kontaktfeder 22 an eine Masseleitung 30 angeschlossen.

Die Beleuchtungsstrahlengänge 9 und 10 sind jeweils identisch ausgeführt und weisen, ausgehend von der zentral angeordneten Halogenlampe 7, jeweils ein justierbares Kollektorlinsensystem 11, eine einstellbare Blende 12, einen justierbaren Kaltlichtspiegel 13, eine einstellbare Beleuchtungsoptik 14, eine Filterhalterung 16 zum Einbringen von farbigen oder von Grau-Filtern oder sowie ein justierbares Prisma 15 auf. Beide Beleuchtungsstrahlengänge 9, 10 werden zur Beleuchtung des Objekts 43 über ein gemeinsames Hauptobjektiv 4 geführt. Über das Kollektorlinsensystem 11, die Blende 12, den einstellbaren Kaltlichtspiegel 13 und die Beleuchtungsoptik 14 kann der jeweilige Beleuchtungsstrahlengang 9, 10 individuell angepaßt werden. Dies ist insbesondere dann von Vorteil, wenn das Operationsmikroskop 3 mit individuell einzustellenden Beobachtungsstrahlengängen ausgestattet ist. Derartig ausgestattete Beobachtungsstrahlengänge beinhalten eine frei wählbare Fokusebene bei feststehendem Hauptobjektiv 4. Um auch hier eine Köhler'sche Beleuchtung realisieren zu können, sind fokussierbare Beleuchtungsstrahlengänge notwendig.

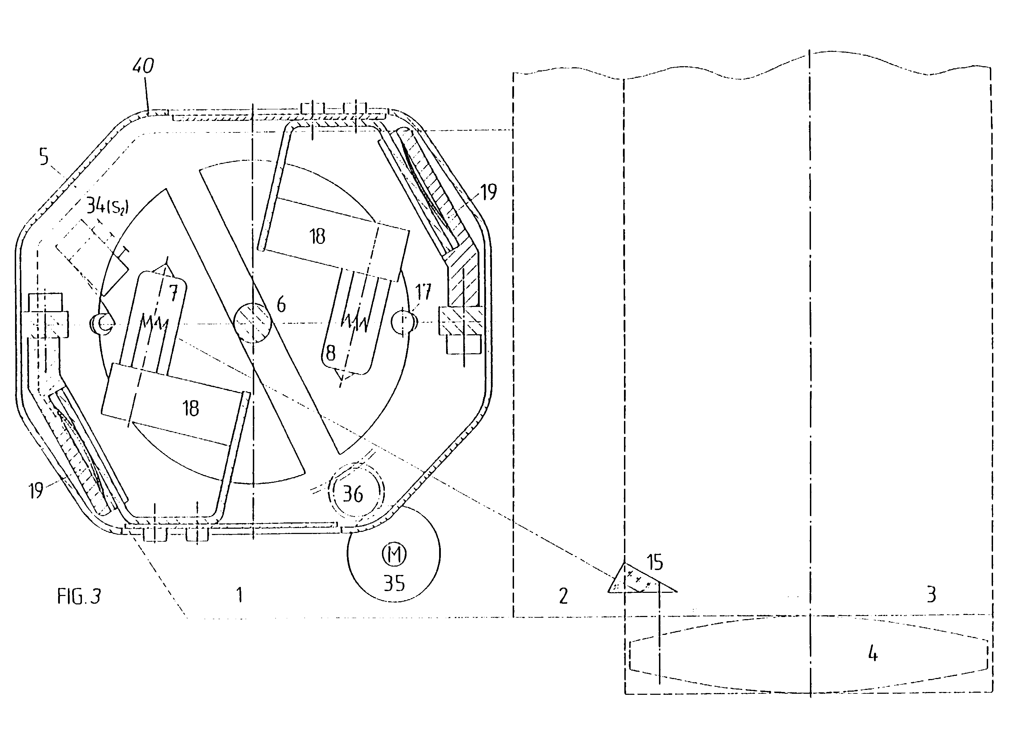

Die Figur 3 zeigt eine Seitenansicht des Lampenschnellwechslers 5 aus der Figur 2. Dabei ist die Aufnahme der Halogenlampen 7 und 8 am Wechsler 5 im Detail dargestellt. Die Halogenlampe 7 ist fest mit einem Halter 18 verbunden, wobei diesem Kalter 18 eine definierte und in sich justierbare Einschubvorrichtung 19 am Lampenschnellwechsler 5 zugeordnet ist. Damit wird gewährleistet, daß der Austausch einer defekten Halogenlampe samt ihrem Halter schnell und präzise durchgeführt werden kann. Eine zusätzliche Zentrierung oder Justage der Halogenlampen 7, 8 entfällt, da diese über die Einschubvorrichtung 19 und den Halter 18 bereits zentriert sind.

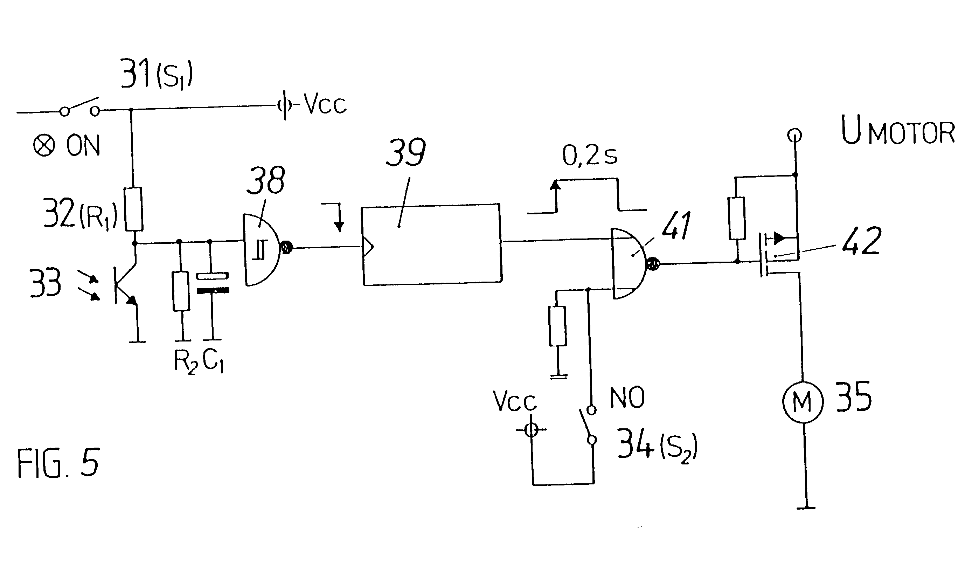

Ferner ist in dieser Figur ein schematisch angedeuteter Elektromotor 35 mit einem Ritzel 36 dargestellt. Dieses Ritzel 36 ist mit dem Lampenschnellwechsler 5 verbunden. Über diese elektromotorische Antriebsverbindung wird die Reservelichtquelle 8 motorisch in Wirkstellung gebracht, wenn dies durch einen Ausfall der Lichtquelle 7 notwendig wird. Eine dazugehörige automatisch arbeitende elektrische Steuerschaltung ist in der Figur 5 näher dargestellt.

In dieser Figur 3 wurde auf die Darstellung der optischen Bauelemente im Beleuchtungsstrahlengang 9 bzw. 10 aus Übersichtsgründen verzichtet. Es ist lediglich der Beleuchtungsstrahlengang 9 mit dem Prisma 15 und dem gemeinsamen Hauptobjektiv 4 dargestellt. Aus dieser Figur wird jedoch deutlich, daß die Beleuchtungsstrahlengänge 9, 10 nur den Randbereich des Hauptobjektivs 4 mit Licht beaufschlagen. Dies ist insofern von Bedeutung, als in der Figur 2 die jeweiligen Strahlengänge 9, 10 zeichnerisch nur in einer Ebene dargestellt sind.

Am Lampenschnellwechsler 5 ist eine Rastung 17 vorgesehen, die der definierten Einstellung der Lichtquelle 7 bzw. der Reservelichtquelle 8 bei einem schnellen Lampenwechsel während der Operation dient. Nach einem Ausfall der Lichtquelle 7 wird durch eine elektrische Schaltung 31 - 34 der Motor 35 aktiviert, der über das Ritzel 36 den Lampenwechsler 5 so lange antreibt bis der elektromechanische Schalter 34 geschlossen und dadurch der Motor 5 abgeschaltet wird. Die elektrische Schaltung ist in der Fig. 5 näher dargestellt.

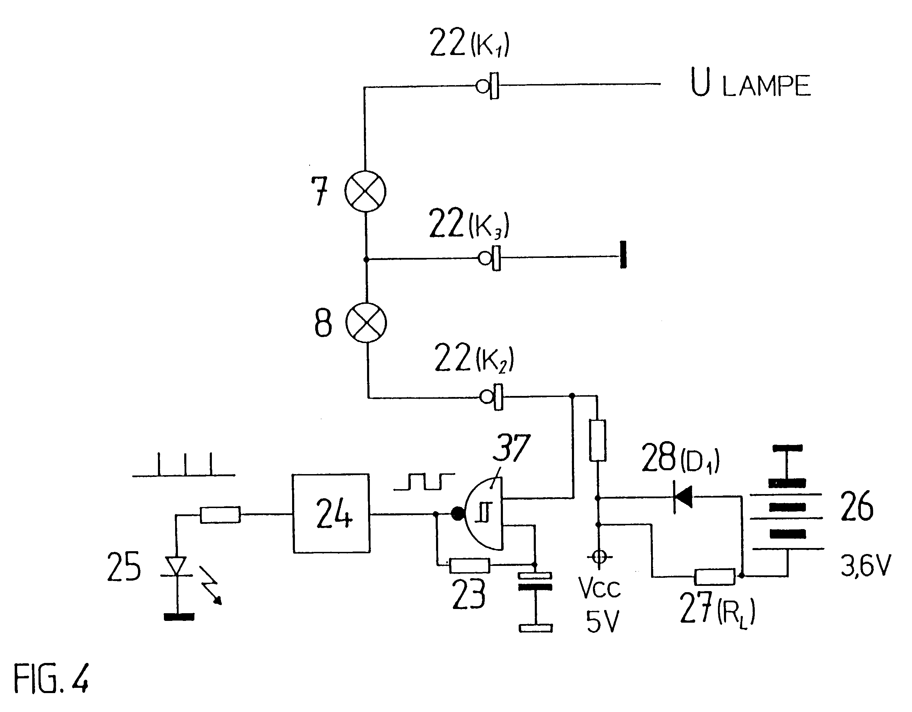

Im schematischen Schaltbild der Figur 4 ist eine Leuchtdiode 25 zur Anzeige defekter Lichtquellen 7, 8 dargestellt. Dazu ist eine separate Spannungsversorgung Vcc vorgesehen, die einen Oszillator 23, mit einem Gatter 37, Kondensator und Widerstand aktiviert und über einen Pulsformer 24 eine Leuchtdiode 25 betreibt. Der Oszillator 23 liefert bei einer defekten Lichtquelle 7, 8 Rechteckimpulse an den Pulsformer 24, der diese in kurze Einzelimpulse umformt. Die daran angeschlossene Leuchtdiode 25 wird dadurch kurzzeitig mit Strom versorgt und gibt somit kurze Lichtimpulse ab. Damit diese Anzeige auch bei einer unterbrochenen Spannungsversorgung bzw. nach dem Ziehen des Netzsteckers funktioniert, ist in dieser Schaltung ein Akkumulator 26 vorgesehen, der bei Netzbetrieb über einen Ladewiderstand 27 nachgeladen wird. Bei einer Unterbrechung der Spannungsversorgung wird die Leuchtdiode 25 über die Diode 28 elektrisch betrieben.

Die Figur 5 zeigt ein schematisches Schaltbild zur Ansteuerung des motorischen Lampenschnellwechslers 5 mit dem Elektromotor 35. Bei geschlossenem Hauptschalter 31 wird die Lichtquelle 7 aktiviert und über eine Netzwerkkombination 32 aus Widerständen R₁, R₂ und einem Kondensator C₁ zunächst ein elektrischer Schaltimpuls des nachgeordneten Gatters 38 so lange unterdrückt, bis die Halogenlampe 7 ihre volle Lichtleistung erreicht hat. Diese Leistung wird über einen lichtempfindlichen Sensor 33 ständig kontrolliert. Bei einem Ausfall der Lichtquelle 7 wird durch den Sensor 33 ein Impuls ausgelöst, der über das Gatter 38 einem Zeitschaltglied 39, welches Impulse von 0.2 sec abgibt zugeführt wird. Über ein nachgeordnetes weiteres Gatter 41 und ein MOSFET 41 wird der Motor 35 so lange aktiviert, bis der Schalter 34 geschlossen wird. Danach befindet sich die Reservelichtquelle 8 in Wirkstellung und der Sensor 33 ist wieder aktiviert.

Nach dem Ausfall der Lichtquelle 7 wird über die bereits beschriebene Schaltung zur Anzeige defekter Lichtquellen die Leuchtdiode 25 aktiviert.

Die Erfindung ist nicht auf eine Beleuchtungseinrichtung mit lediglich zwei separaten Beleuchtungsstrahlengängen und einem Lampenschnellwechsler mit lediglich zwei Lichtquellen in einem Lampenhaus für ein Operationsmikroskop beschränkt, sondern überall dort einsetzbar, wo von einer einzigen aktiven Lichtquelle mehrere Beleuchtungsstrahlengänge ausgehen. Dadurch ist es möglich, auf dem zu beleuchtenden Objekt für mehrere Ausgänge (Beobachtungsstrahlengänge) gleiche Lichtverhältnisse zu schaffen. Selbstverständlich kann der beschriebene und dargestellte Lampenschnellwechsler auch mit mehreren Reservelichtquellen ausgestattet sein. Die Erfindung ist nicht ausschließlich auf einen Lampenschnellwechsler mit mindestens einer Reservelichtquelle beschränkt, sondern auch überall dort einsetzbar, wo zusätzliche Lichtquellen mit unterschiedlichen physikalischen Eigenschaften benötigt werden.

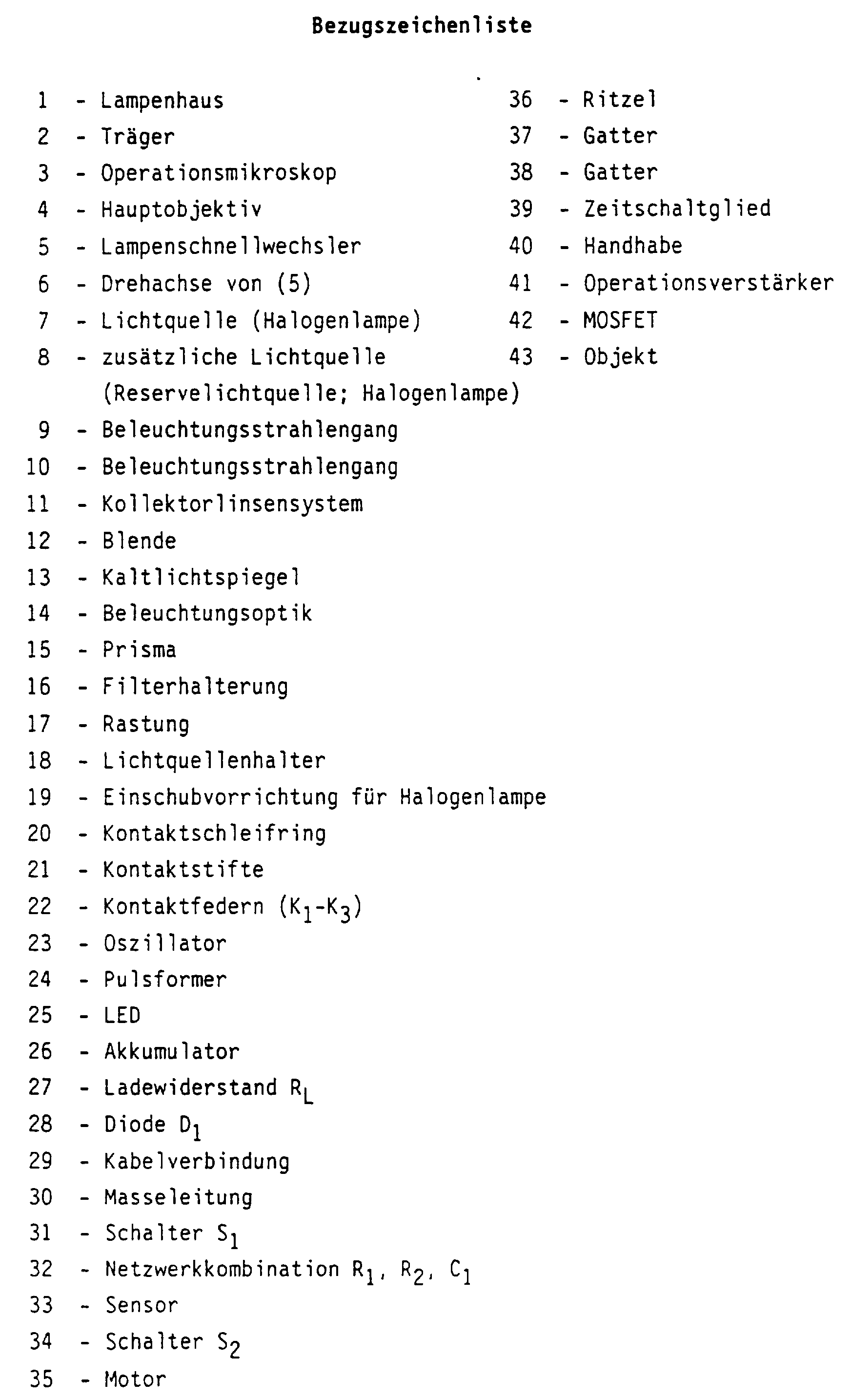

## Patentansprüche

1. Beleuchtungseinrichtung für ein Operationsmikroskop mit einem Hauptobjektiv (4), einem Beleuchtungsstrahlengang (9), der optische Elemente (11, 13, 14, 15) zur Beleuchtung eines Objektes (43) aufweist,und einem dem Beleuchtungsstrahlengang zugeordneten Lampenhaus (1), in dem mindestens zwei Lichtquellen (7,8) auf einem Lampenschnellwechsler (5) angeordnet sind, wobei die Lichtquellen wahlweise zur Objektbeleuchtung ansteuerbar sind, dadurch gekennzeichnet, daß mithilfe des Lampenschnellwechslers die jeweils aktive Lichtquelle (7) zentral im Lampenhaus (1) angeordnet werden kann, daß zur Objektbeleuchtung ein zweiter, separat ausgebildeter Beleuchtungsstrahlengang (10) in bezug auf die aktive Lichtquelle (7) symmetrisch zum ersten Beleuchtungsstrahlengang (9) vorgesehen ist und daß über beide Beleuchtungsstrahlengänge (9, 10) das Objekt durch das Hauptobjektiv (4) beleuchtet wird.

2. Beleuchtungseinrichtung nach Anspruch 1, dadurch gekennzeichnet, daß in jedem der Beleuchtungsstrahlengänge (9, 10) ein Kollektorlinsensystem (11), eine einstellbare Blende (12), ein Kaltlichtspiegel (13), eine Beleuchtungsoptik (14) sowie ein Prisma (15) vorgesehen ist und mindestens eines dieser Bauelemente (11 -15) justierbar ausgebildet ist.

3. Beleuchtungseinrichtung nach Anspruch 2, dadurch gekennzeichnet, daß der Lampenschnellwechsler (5) als ein senkrecht zum Kollektorlinsensystem (11) angeordnetes Rad ausgebildet ist.

4. Beleuchtungseinrichtung nach Anspruch 1 bis 3, dadurch gekennzeichnet, daß der Lampenschnellwechsler (5) drehbar ausgebildet und über eine Handhabe (40) eine der Lichtquellen (7, 8) in Wirkstellung bringbar ist.

5. Beleuchtungseinrichtung nach Anspruch 1 bis 3, dadurch gekennzeichnet, daß der Lampenschnellwechsler (5) über ein motorisches Stellmittel (35) und eine Steuerschaltung (31-34) bewegbar ausgebildet ist.

6. Beleuchtungseinrichtung nach mindestens einem der vorherigen Ansprüche, dadurch gekennzeichnet, daß eine der Lichtquellen (8) als Reservelichtquelle ausgebildet ist.

7. Beleuchtungseinrichtung nach Anspruch 5 und 6, dadurch gekennzeichnet, daß die Steuerschaltung (31-34) bei einem Ausfall der Lichtquelle (7) den Motor (35) zum Wechsel auf die Reservelichtquelle (8) automatisch ansteuert.

8. Beleuchtungseinrichtung nach Anspruch 6, dadurch gekennzeichnet, daß zusätzlich mindestens eine Leuchtdiode (25) zur Anzeige defekter Reservelichtquelle(n) (8) vorgesehen ist.

9. Beleuchtungseinrichtung nach Anspruch 8, dadurch gekennzeichnet, daß die Leuchtdiode (25) mit einem Akkumulator (26) verbunden ist, um nach dem Abschalten der Stromversorgung eine Anzeige defekter Reservelichtquelle(n) (8) zu gewährleisten.

10. Beleuchtungseinrichtung nach mindestens einem der vorherigen Ansprüche, dadurch gekennzeichnet, daß zur Stromversorgung die jeweils aktive Lichtquelle (7) über Kontaktfedern (22), Kontaktstifte (21) sowie einem Kontaktschleifring (20) mit den Stromkabeln (29) verbunden ist.

11. Beleuchtungseinrichtung nach mindestens einem der vorherigen Ansprüche, dadurch gekennzeichnet, daß jeder der Beleuchtungsstrahlengänge (9, 10) zusätzlich mindestens eine Filterhalterung (16) aufweist.

## Claims

1. Illuminating equipment for a surgical microscope with a main objective (4), an illumination beam path (9), which displays optical elements (11, 13, 14, 15) for the illumination of an object (43), and a lamp housing (1), which is associated with the illuminating beam path and in which at least the light sources (7, 8) are arranged on a quick-lamp-change unit (5), wherein the light sources are selectably controllable for object illumination, characterised thereby, that the respectively active light source (7) can be arranged centrally in the lamp housing (1) with the aid of the quick-lamp-change unit (5), a second separately formed illumination beam path (10) for the illumination of the object is provided symmetrically, with respect to the active light source (7), to the first illumination beam path (9) and that the object is illuminated through the main objective (4) by way of both the illumination beam paths (9, 10).

2. Illuminating equipment according to claim 1, characterised thereby, that a condenser lens system (11), a settable light stop (12), a cold-light mirror (13), an optical illuminating system (14) as well as a prism (15) are provided in each of the illumination beam paths (9, 10) and at least one of these components (11 to 15) is constructed to be adjustable.

3. Illuminating equipment according to claim 2, characterised thereby, that the quick-lamp-change unit (5) is arranged as a wheel arranged perpendicularly to the condenser lens system (11).

4. Illuminating equipment according to claims 1 to 3, characterised thereby, that the quick-lamp-change unit (5) is constructed to be rotatable and one of the light sources (7, 8) is bringable into operative setting by means of a handle (40).

5. Illuminating equipment according to claims 1 to 3, characterised thereby, that the quick-lamp-change unit (5) is constructed to be movable by way of a motorised setting means (35) and a control circuit (31 to 34).

6. Illuminating equipment according to at least one of the preceding claims, characterised thereby, that one of the light sources (7, 8) is constructed as reserve light source.

7. Illuminating equipment according to claims 5 and 6, characterised thereby, that the control circuit (31 to 34) on a failure of the light source (7) automatically drives the motor (35) to change to the reserve light source (8).

8. Illuminating equipment according to claim 6, characterised thereby, that at least one luminescent diode (25) is provided in addition for the indication of any defective reserve light source (8).

9. Illuminating equipment according to claim 8, characterised thereby, that the luminescent diode (25) is connected with an accumulator (26) in order to ensure an indication of any defective reserve light source (8) after the current supply has been switched off.

10. Illuminating equipment according to at least one of the preceding claims, characterised thereby, that the respectively active light source (7) is connected for current supply by way of contact springs (22), contact pins (21) as well as a contact wiper ring (20) with the current cables (29).

11. Illuminating equipment according to at least one of the preceding claims, characterised thereby, that each of the illumination beam paths (9, 10) in addition displays at least one filter mount (16).

## Revendications

1. Dispositif d'éclairage pour un microscope d'opérations avec un objectif principal (4) et une marche de rayons d'éclairage (9) qui comprend des éléments optiques (11, 13, 14, 15) pour l'éclairage d'un objet (4, 3), et avec un boîtier de lampes (1) associé à la marche de rayons d'éclairage et dans lequel au moins deux sources de lumière (7, 8) sont disposées sur un dispositif à alternance rapide de lampes (5), les sources de lumière pouvant être commandées au choix pour l'éclairage de l'objet, caractérisé en ce que la source de lumière active respective à l'aide du dispositif à alternance rapide de lampes peut être disposée de façon centrale dans le boîtier de lampes (1) et que, pour l'éclairage de l'objet, une seconde marche de rayons d'éclairage (10), configurée séparément est prévue symétriquement par rapport à la source de lumière active (7) à la première marche de rayons d'éclairage (9) et que l'objet est éclairé à travers l'objectif principal, à l'aide des deux marches de rayons d'éclairage (9, 10).

2. Dispositif d'éclairage selon la revendication 1, caractérisé en ce que dans chacune des marches de rayons d'éclairage (9, 10) sont prévus un système de lentille de convergence ou collectives (11), un diaphragme ajustable (12), un miroir à lumière froide (13), une optique d'éclairage (14) ainsi qu'un prisme (15) et au moins l'un de ces composants (11-15) est réalisé de façon à être ajustable.

3. Dispositif d'éclairage selon la revendication 2, caractérisé en ce que le dispositif à alternance de lampes rapide (5) est réalisé sous forme d'une roue disposée perpendiculairement au système de lentille convergentes (11).

4. Dispositif d'éclairage selon l'une des revendications 1 à 3, caractérisé en ce que le dispositif à alternance de lampes rapide (5) est réalisé de façon à être rotatif et en ce qu'une des sources de lumière (7, 8) peut être mise en position active à l'aide d'un organe de manoeuvre manuelle (40).

5. Dispositif d'éclairage selon l'une des revendications 1 à 3, caractérisé en ce que le dispositif à alternance de lampes rapide (5) est réalisé de façon à être déplaçable par l'intermédiaire de moyens de réglage moteurs (35) et d'un montage de commande (31-34).

6. Dispositif d'éclairage selon l'une des revendications précédentes, caractérisé en ce qu'une des sources de lumière (8) est réalisée sous forme d'une source de lumière de réserve.

7. Dispositif d'éclairage selon la revendication 5 et 6, caractérisé en ce que le montage de commande (31-34) commande automatiquement, lors d'une défaillance de la source de lumière (7), le moteur (35) pour l'alternance sur la source de lumière de réserve (8).

8. Dispositif d'éclairage selon la revendication 6, caractérisé en ce que, supplémentairement, au moins une diode électroluminescente (25) est prévue pour l'indication de sources de lumière de réserve(s) défectueuses.

9. Dispositif d'éclairage selon la revendication 8, caractérisé en ce que la diode électroluminescente (25) est reliée à un accumulateur (26) pour assurer, après la déconnexion de l'alimentation en courant, un affichage de la ou des sources de lumière de réserve défectueuse (8).

10. Dispositif d'éclairage selon l'une des revendications précédentes, caractérisé en ce que, pour l'alimentation en courant, la source de lumière respectivement active (7) est reliée par des ressorts de contact (22), des fiches de contact (21) ainsi qu'une bague glissante de contact (20) au câble à courant (29).

11. Dispositif d'éclairage selon l'une des revendications précédentes, caractérisé en ce que chacune des marches de rayons d'éclairage (9, 10) comprend supplémentairement au moins un support de filtre (16).
